# EUROPÄISCHE PATENTANMELDUNG

(11) **EP 0 733 455 A2**
(43) Veröffentlichungstag der Anmeldung: **25.09.1996**
(21) Anmeldenummer: 96104649.7
(22) Anmeldetag: 19.03.1996
(51) Int. Cl.: B29C 33/44, B29C 33/46

(54) **Werkzeug mit Entformvorrichtung zur Abformung mikrostrukturierter Bauteile**

(30) Priorität: 22.03.1995 DE 19509452
(71) Anmelder: IMM INSTITUT FÜR MIKROTECHNIK GmbH, D-55129 Mainz-Hechtsheim (DE)
(72) Erfinder: Anderhub, Marc, 65388 Schlangenbad (DE); Andreas, Michel, Dr., 76571 Gaggenau (DE)
(74) Vertreter: COHAUSZ HASE DAWIDOWICZ & PARTNER

(57) **Zusammenfassung**

Die Erfindung betrifft ein Verfahren und eine Vorrichtung zur Herstellung eines Formteils mittels Abformung von Mikrostrukturen, mit einem die abzuformende Mikrostruktur enthaltenden Formeinsatz, mit einem zwischen einer Ruheposition und einer Arbeitsposition verfahrbaren Auswerfer zur Entformung des Formteils, wobei der Auswerfer den Formeinsatz randseitig umgibt.

## Beschreibung

Die Erfindung betrifft eine Vorrichtung zur Herstellung von mikrostrukturierten Formteilen mittels Abformung mit den Merkmalen des Oberbegriffs des Anspruchs 1 sowie ein Verfahren zur Herstellung von mikrostrukturierten Formteilen mittels Abformung mit den Merkmalen des Oberbegriffs des Anspruchs 15.

Unter Mikrostrukturen versteht man körperliche Gebilde mit Dicken oder Wandstärken im Mikrometerbereich, wobei die Höhe der Strukturen bei den heute gängigen Materialien etwa bis zum 100-fachen der Dicke bzw. der Wandstärke reichen kann. Das Verhältnis zwischen Dicke und Höhe nennt man in der Mikrotechnik das Aspektverhältnis.

Zur Erzeugung von Mikrostrukturen mit hohen Aspektverhältnis gibt es verschiedene Möglichkeiten, beispielsweise lithographische Verfahren unter Benutzung von UV- und Röntgenstrahlung. Beim LIGA-Verfahren wird eine kurzwellige Röntgenstrahlung verwendet, so daß bei der Belichtung nur geringe Beugungserscheinungen auftreten. Die durch die Maske Entwickeln herausgelöst, wodurch die Primärstrukturen entstehen. Zur Herstellung eines entsprechenden Abformwerkzeuges, nachfolgend als Formeinsatz bezeichnet, werden die Primärstrukturen galvanisch mit Metall aufgefüllt, bis die Stirnfläche mit Metall überwachsen ist. Die Kavitäten des Formeinsatzes entsprechen den Primärstrukturen.

Die nach dem LIGA-Verfahren hergestellten Mikrostrukturen und Formeinsätze zeichnen sich durch senkrechte, parallele Wände mit einer extrem geringen Rauhigkeit (Ra=50nm) aus.

Bei der Herstellung von mikrostrukturierten Formteilen werden zunächst die Kavitäten des Formeinsatzes über den Außenraum evakuiert und anschließend mit Formmasse befüllt, beispielsweise einem thermoplastischen Kunststoff. Hierzu werden beim Heißprägen Formeinsatz und Kunststoff gemeinsam aufgeheizt (bis die Formmasse fließfähig ist), dann der Formeinsatz in die Formmasse gedrückt und diese anschließend im Formeinsatz abgekühlt. Eine andere Möglichkeit zur Abformung stellt das Sprutzgießen dar. Hier erfolgt die Formgebung durch Einspritzen der heißen Formmasse unter hohem Druck in das i.a. deutlich kältere Werkzeug (mit Formeinsatz).

Nach dem Erstarren des Kunststoffs infolge Temperaturabsenkung ist das Formteil in der Mikrostruktur ausgebildet, und es stellt sich das Problem, dieses Formteil aus der Mikrostruktur herauszubringen. Dieser Vorgang ist nicht unproblematisch, weil zum einen die parallelen Wände der Mikrostruktur (infolge der Herstellung mittels Röntgenlithographie) keine Entformungsschrägen enthalten, so daß entlang des gesamten Entformungsweges die Reibung an der Wandung zu überwinden ist. Außerdem unterliegen die Mikrostrukturen mit steigendem Aspektverhältnis immer größeren Zugspannungen in dem Basisbereich, an dem sie mit dem Formteil in Verbindung stehen.

Zum Entformen derartiger Formteile sind Vorrichtungen bekannt, bei denen das mikrostrukturierte Formteil auf der Rückseite formschlüssig mit einer Metallplatte im Werkzeug verbunden ist (Kernforschungszentrum Karlsruhe, KfK-Bericht Nr. 4711, (1990)) und somit beim Öffnen des Werkzeug entformt wird (vergleichsweise aufwendig) oder bei denen die abzuformende Mikrostruktur selbst in Bereichen, in denen keine abzuformende Gestaltung vorhanden ist, von Auswerferstiften durchsetzt werden, die punktuell auf das erstellte Formteil drücken. Die Anwendung dieser Auswerferstifte, die an sich aus der makroskopischen Kunststoffertigung bekannt sind, führt bei der Mikrotechnik zu zwei Problemen. Zum einen wird durch die Anordnung der Öffnungen für die Auswerferstifte in dem abzuformenden Einsatz benutzbarer Fläche verschenkt, so daß sich mit einem Abformvorgang weniger mikrostrukturierte Bauteile herstellen lassen. Außerdem führt die Anwendung der Auswerferstifte zu einer punktuellen Druckbelastung auf dem Kunststofformteil, das sich entsprechend verbiegt. Die Biegespannungen können dazu führen, daß die so erzeugten Mikrostrukturen abreißen oder sich verziehen. Schließlich ist auch die Geometrie der verwendbaren Formeinsätze nur eingeschränkt wählbar, wenn ein vorhandenes Werkzeug mit festgelegten Positionen der Auswerferstifte verwendet werden soll.

Es ist daher Aufgabe der Erfindung, eine Vorrichtung und ein Verfahren zur Herstellung von Formteilen zu schaffen, bei der die Biegespannungen, mit denen das Formteil bei der Entformung beaufschlagt wird, geringer sind und bei der außerdem keine geometrischen Einschränkungen der zur Verfügung stehende Oberfläche des abzuformenden Mikrostrukturteils bestehen.

Diese Lösung wird von einer Vorrichtung mit den Merkmalen des Anspruchs 1 sowie von einem Verfahren mit den Merkmalen des Anspruchs 15 gelöst.

Weil der Auswerfer das Formteil randseitig (außerhalb der strukturierten Fläche) zumindest abschnittsweise untergreift, kann der Auswerfer beim Verfahren von seiner Ruheposition in seine Arbeitsposition das Formteil randseitig ergreifen und die Ablösekraft in das Formteil einleiten. Eine bessere Ausnutzbarkeit der zur Verfügung stehenden Oberfläche des Formeinsatzes (Negativform) ergibt sich, weil keine Bereiche des Formeinsatzes für die durchtretenden Auswerferstifte benötigt werden. Schließlich ist der Auswerfer auch einfach an den Formeinsatz anzupassen.

Eine einfache geometrische Gestaltung, insbesondere auch des erzeugten Formteils ergibt sich, wenn der Auswerfer in seiner Ruheposition an seiner dem Formteil zugewandten Seite mit dem Formeinsatz bündig abschließt. Es kann aber auch gewünscht sein, daß der Auswerfer geringfügig über den Formeinsatz heraussteht und im Radius kleiner wird als der Formeinsatz, so daß sich gegenüber dem zu erzeugenden Formteil eine Hinterschneidung bildet, die das Formteil im entformten Zustand in dem Auswerfer hält.

Eine gleichmäßige Krafteinleitung wird möglich, wenn der Auswerfer das Formteil beim Verfahren von seiner Ruheposition in seine Arbeitsposition randseitig von dem Formeinsatz abhebt.

Eine besonders vorteilhafte Ausgestaltung der erfindungsgemäßen Vorrichtung ergibt sich, wenn an der dem Formteil abgewandten Seite des Auswerfers wenigstens in seiner Arbeitsposition ein Raum vorgesehen ist, der mit einem unter Druck stehenden Fluid füllbar ist. Dabei wird das Entformen des Formteils vorteilhaft dadurch unterstützt, daß das unter Druck stehende Fluid in der Arbeitsposition des Auswerfers randseitig unter das Formteil greifen kann und einen Druck zwischen dem Formeinsatz mit der abzuformenden Mikrostruktur und dem zu entformenden Formteil aufbauen kann. In diesem Fall wird zumindest ein Teil des Formteils mit Druck in Richtung der Entformungsrichtung beaufschlagt, so daß diese Druckkraft die Entformung unterstützt.

Vorteilhaft ist hierbei, wenn auch die Auswerfer selbst durch die Druckkraft des Fluids in seine Arbeitsposition verfahren wird.

Es ist konstruktiv vorteilhaft, wenn der Auswerfer ringförmig gestaltet ist, denn dann werden die Zugspannungen am Rand des Formteils gleichmäßig eingeleitet. Außerdem kann der Auswerfer in einfacher Weise als Drehteil hergestellt werden.

Wenn der Innendurchmesser des Auswerfers von der dem Formteil zugewandten Seite zu der dem Formteil abgewandten Seite hin größer wird, kann er den Formeinsatz kegelförmig umschließen und gibt schon bei einer geringfügigen Bewegung in Richtung seiner Arbeitsposition einen Ringspalt um den Formeinsatz herum frei, in den das unter Druck stehende Fluid eindringen kann. Weil der Auswerfer gleichzeitig die Randbereiche des Formteils anhebt, kann das Fluid durch diesen Ringspalt unter das Formteil gelangen und mit seiner Druckkraft die Entformung fördern. Bei einer derartigen Gestaltung des Auswerfers ist auch die Abdichtung zwischen dem Auswerfer und dem Formeinsatz so herstellbar, daß die Formmasse nicht in den Bereich zwischen Formeinsatz und Auswerfer eindringen kann. Dadurch wird das Abheben des Auswerfers aus seiner Ruheposition erleichtert.

Der Formeinsatz ist bei einer erfindungsgemäßen Vorrichtung vorteilhaft nach dem LIGA-Verfahren mittels Röntgenlithographie hergestellt. Andere Mikrostrukturierungsverfahren sind aber ebenso möglich.

Außerdem kann der Formeinsatz für eine feste Halterung auf einer Trägerplatte angelötet sein. Der Auswerfer ist vorteilhaft wenigstens zweiteilig gestaltet, wobei er einen ringförmigen Abstreifrahmen aufweist. Außerdem kann der Auswerfer einen Träger aufweisen. Diese vorteilhafte Gestaltung ermöglicht für ein und denselben Träger die Montage unterschiedlicher Abstreifrahmen, die jeweils im Querschnitt den verwendeten Formeinsätzen angepaßt sein können.

Dabei ist eine einfache Konstruktion möglich, wenn der Abstreifrahmen auf dem Träger befestigt wird und vorzugsweise der Auswerfer mit dem Abstreifrahmen und dem Träger koaxial zu dem Formeinsatz angeordnet ist. Die funktionswesentlichen Bauteile der erfindungsgemäßen Vorrichtung sind dann als Drehteile einfach herstellbar.

Das unter das Formteil eingeleitete Fluid, beispielsweise Druckluft, unterstützt den Entformprozeß, da sich ein Druck zwischen dem Formteil und dem Formeinsatz aufbauen kann. Die Verbiegung des Formteils bei der Entformung wird dadurch gering gehalten und Beschädigungen werden vermieden.

Wenn das Formteil in seinem gesamten Randbereich angehoben wird, kommt es zu einer gleichmäßigen Krafteinleitung und zu einer im wesentlichen senkrechten Entformung mit Bezug auf den Formeinsatz.

Es kann auch von Vorteil sein, das Formteil nur in einem Randbereich anzuheben. Bei Einleitung des unter Druck stehenden Fluidsbeginnt der Entformprozeß dann an der angehobenen Seite und pflanzt sich unter dem Formteil fort. Die dabei auftretenden Schälkräfte zwischen Formteil und Formeinsatz unterstützen den Entformungsprozeß in vorteilhafter Weise.

Verbiegungen und Beschädigungen, insbesondere am Rand des Formteils werden minimiert, wenn die anfängliche Anhebung nur 100 µm oder weniger, insbesondere 10 µm oder weniger beträgt.

Bei der Entformung ist es vorteilhaft, das Fluid nicht sprunghaft einzuleiten, sondern den Druck langsam, beispielsweise über wenigstens eine Sekunde oder sogar über wenigstens zehn Sekunden, zu erhöhen. Dadurch wird der Entformungsprozeß verlangsamt und punktuell auftretende Belastungen vermieden.

Im folgenden wird ein bevorzugtes Ausführungsbeispiel der Erfindung anhand der Zeichnung beschrieben. Es zeigen:
- Figur 1:: Eine erfindungsgemäße Vorrichtung zur Herstellung eines Formteils mittels Heißprägen mit der dazugehörigen Vakuumkammer und den Wärmetauschern;
- Figur 2:: den mit A bezeichneten Ausschnitt aus Figur 1, mit einem darauf befindlichen Formteil; sowie
- Figur 3:: den Ausschnitt gemäß Figur 2, wobei sich der Auswerfer in seiner Arbeitsposition befindet.

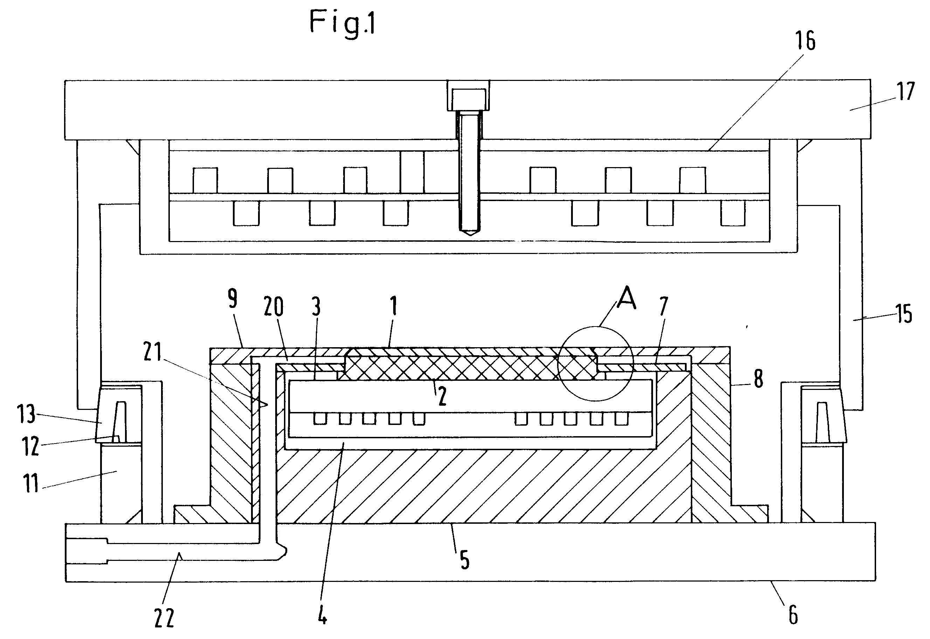

In der Figur 1 ist eine Vorrichtung zur Herstellung eines Formteils mittels Heißprägen in einem Querschnitt von der Seite dargestellt. Die gesamte Vorrichtung ist im wesentlichen rotationssymmetrisch und weist einen Durchmesser von insgesamt etwa 200 mm bei einer Höhe in der Darstellung der Figur 1 von etwa 150 mm auf.

Ein mikrostrukturierter Formeinsatz 1 von etwa 70 mm Durchmesser trägt die durch Röntgenlithographie nach dem sogenannten LIGA-Verfahren hergestellte Mikrostrukturen, die das Negativ der herzustellenden Formteile darstellt. Der Formeinsatz 1 ist an seiner Unterseite, die den Öffnungen der Mikrostruktur gegenüberliegt, mit einer Trägerplatte 2 verlötet. Die Trägerplatte 2 wiederum ist auf einem Wärmetauscher 3 angeordnet, der im Betrieb dazu dient, den Formeinsatz 1 über die Trägerplatte 2 aufzuheizen und abzukühlen.

Der Wärmetauscher 3 ist zur thermischen Isolation von einem Ringspalt umgeben und ruht auf einer thermisch isolierenden Platte 4. Diese wiederum ist in einem feststehenden Kolben 5 in einer zylindrischen Kammer desselben eingebettet. Der Kolben 5 schließlich ruht auf einer Grundplatte 6.

Der Kolben 5 trägt an seiner Oberseite einen Spannring 7, der die Trägerplatte und damit den Formeinsatz auf dem Wärmetauscher fixiert.

Der im wesentlichen zylindrische Kolben 5 ist an seiner Außenseite von einem konzentrisch angeordneten, hohlzylindrischen Träger 8 umgeben. Der Träger 8 liegt an seiner Unterseite in der Ruhestellung auf der Grundplatte 6 auf und ist bezüglich der gemeinsamen Achse von Träger 8 und Kolben 5 beweglich, wobei zwischen dem Träger 8 und dem Kolben 5 eine Spielpassung vorgesehen ist. An seiner Oberseite trägt der Träger 8 einen Abstreifrahmen 9, der als flaches ringförmiges Drehteil ausgestaltet ist. Der Abstreifrahmen 9 ist ebenfalls rotationssymmetrisch und vom Durchmesser her dem Träger 8 angepaßt. Der Abstreifrahmen 9 ist im Bereich seiner mittig angeordneten inneren Öffnung dem Durchmesser des Formeinsatzes 1 angepaßt. Der Formeinsatz 1 ist an seiner Außenseite abgeschrägt, wobei der Bereich kleineren Durchmessers in der Figur 1 oben angeordnet ist, während der Bereich größeren Durchmessers nach unten der Trägerplatte 2 zugewandt ist und im Durchmesser der Trägerplatte 2 angepaßt ist. Der schräge Außenbereich des Formeinsatzes 1 wird durch eine komplementäre Schräge des Abstreifrahmens 9 so abgedeckt, daß die Berührungsstelle im wesentlichen dicht ist.

Konzentrisch um die insoweit beschriebene Anordnung herum ist ein ringförmiger Sockel 11 angeordnet, dessen Höhe geringfügig geringer ist als die des Trägers 8. Der Sockel trägt an seiner Außenseite in einer Nut 12 eine umlaufende Dichtung 13. In senkrechter Richtung beweglich ist auf dem Sockel 11 ein Verschlußstück 15 aufgesetzt, das nach unten über die Dichtung 13 abgesenkt werden kann, wobei die Dichtung 13 den Innenraum der Vorrichtung mit den darin befindlichen Bauelementen gegenüber der Außenluft dicht verschließt. Das Verschlußstück 15 ist an seiner Oberseite mit einem weiteren Wärmetauscher 16 und einem Abschlußdeckel 17 verbunden und stellt gemeinsam mit dem Wärmetauscher 16 und dem Abschlußdeckel 17 praktisch die obere Werkzeughälfte dar. Die weiteren Bauelemente des Sockels 11 und des Verschlußelements 15 sind im Zusammenhang mit der erfindungsgemäßen Vorrichtung nicht funktionswesentlich und sollen deshalb im folgenden nicht weiter beschrieben werden.

Zwischen dem Spannring 7 und dem Abstreifrahmen 9 befindet sich ein ringförmiger Spalt 20, der über zwei Bohrungen 21 und 22 mit einem nicht weiter dargestellten Anschluß und einem Ventil mit einem unter Druck stehenden Fluid verbunden ist. Das Fluid ist bei der derzeit bevorzugten Ausführungsform Stickstoff.

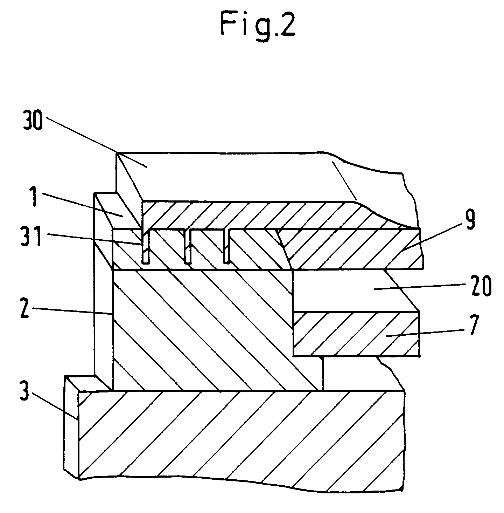

In der Figur 2 ist der Bereich, der in Figur 1 mit A bezeichnet ist, genauer dargestellt. Der mikrostrukturierte Formeinsatz 1 ruht auf der Trägerplatte 2, diese wiederum ruht auf dem Wärmetauscher 3 und wird durch den Spannring 7 fixiert. Der Abstreifrahmen 9 liegt an der Außenseite des Formeinsatzes 1 dicht an, wobei die Oberflächen des Formeinsatzes 1 und des Spannrings 9 bündig miteinander abschließen. In der Darstellung gemäß Figur 2 ist eine Formmasse 30 dargestellt, die den Formeinsatz 1 in seiner gesamten Fläche überdeckt und nach außen auf den Abstreifrahmen 9 übergreift. Von der Oberfläche des Formeinsatzes 1 ausgehende, nach unten verlaufende mikrostrukturierte Kavitäten 31 sind mit der Formmasse 30 gefüllt. Zwischen dem Spannring 7 und dem Abstreifrahmen 9 ist der ringförmige Spalt 20 erkennbar.

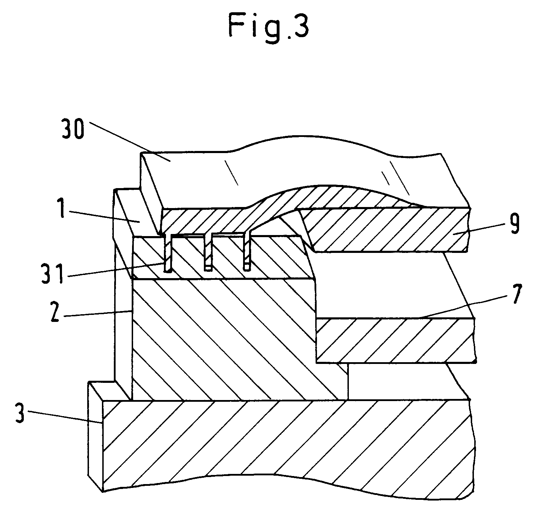

In der Figur 3 ist der Ausschnitt A aus Figur 1 genau so dargestellt wie in Figur 2, jedoch ist der Abstreifrahmen 9 gegenüber dem Formeinsatz 1 in Richtung der gemeinsamen Achse der Vorrichtung angehoben, d. h. in der Darstellung der Figur 1 senkrecht nach oben. Der Abstreifrahmen 9 hebt dabei die erstarrte Formmasse 30 an und löst das Formteil mit den Mikrostrukturen und dem plattenförmigen Grundkörper zumindest im Randbereich des Formeinsatzes 1 aus den Kavitäten 31 des Formeinsatzes. Bei der Verwendung der insoweit beschriebenen Vorrichtung zur Herstellung eines mikrostrukturierten Formteils wird die Vorrichtung gemäß dieser Ausführungsform folgendermaßen verwendet:

Der mikrostrukturierte Formeinsatz 1 wird auf der Trägerplatte 2 festgelötet, diese wird konzentrisch auf den Wärmetauscher 3 aufgesetzt und mittels des Spannrings 7 fixiert. Sodann wird der zylindrische Träger 8 mit dem für den montierten Formeinsatz 1 geeigneten Abstreifrahmen 9 versehen und von oben über den Kolben 5 gestreift. Der Träger 8 mit dem Abstreifrahmen 9 wird abgesenkt, bis der Träger 8 auf der Grundplatte 6 aufliegt und der Abstreifrahmen 9 bündig mit dem Formeinsatz 1 abschließt und letzteren dicht gegenüber dem Ringspalt 21 verschließt. Sodann wird ein Rohling aus einem geeigneten Material, beispielsweise aus thermoplastischem Kunststoff, auf den Formeinsatz 1 so aufgelegt, daß er den Formeinsatz 1 und zum Teil auch den Abstreifrahmen 9 überdeckt. Geeignet sind in diesem Zusammenhang nicht nur thermoplastische Kunststoffe, sondern auch duromere, metallische, keramische oder präkeramische Formmassen. Schließlich wird das Verschlußstück 15 über die Dichtung 13 und den Sockel 11 gestreift und somit der Innenraum der Vorrichtung hermetisch nach außen abgeschlossen. Nun wird die gesamte Vorrichtung evakuiert, so daß die Luft aus den Kavitäten des mikrostrukturierten Formeinsatzes 1 entfernt wird.

Zum Abformen werden nun die Wärmetauscher 3 und 16 erhitzt, wobei zu Gunsten einer kurzen Zykluszeit, die 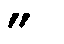 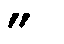 thermisch träge Masse" durch die Isolation bei 4 gering gehalten ist. Gleichzeitig wird auf das Verschlußstück 15 von oben beispielsweise durch einen Hydraulikkolben eine Druckkraft ausgeübt, so daß die durch Temperatureinwirkung plastisch verformbare Formmasse in die Kavitäten des mikrostrukturierten Formeinsatzes 1 gepreßt wird. Weil der Abstreifrahmen 9 bündig mit dem Formeinsatz 1 abschließt und letzteren dicht gegenüber dem Ringspalt 21 verschließt, kann keine Formmasse zwischen den Formeinsatz 1 und den Abstreifrahmen 9 gelangen. Dadurch wird die spätere Entformung erleichtert.

Wenn die Kavitäten 31 des mikrostrukturierten Formeinsatzes 1 vollständig mit Formmasse gefüllt sind, werden die Wärmetauscher 3 und 16 abgekühlt, bis die Formmasse erstarrt. Sodann kann das Verschlußstück 15 abgehoben werden, und es ist der in Figur 2 skizzierte Zustand erreicht. Nun wird das an die Vorrichtung angeschlossene, unter Druck stehende Stickstoffgas über die Bohrungen 22 und 21 in den Ringspalt 20 eingelassen. Durch die Einwirkung des Gasdrucks, beispielsweise 5 bis 6 bar, wird der auf dem Kolben 5 beweglich gelagerte Träger 8 mitsamt dem Abstreifrahmen 9 angehoben. Dieser Zustand ist in Figur 3 veranschaulicht. Der Hub des Trägers 8 mit dem Abstreifrahmen 9 wird durch nicht dargestellte mechanische Anschläge begrenzt, wobei die Rückstellung in die Ruheposition durch Rückstellfedern erleichtert wird. So ist es zum Beispiel möglich, Schrauben zu verwenden, die in Gewindebohrungen der Grundplatte 6 eingeschraubt sind und durch Durchgangsbohrungen in dem Auswerfer 8,9 verlaufen. Die Schraubenköpfe können dann mit ihrer Unterseite um den gewünschten Hub über den Abstreifrahmen 9 herausstehen und als Anschläge dienen. Schraubenfedern zwischen dem Abstreifrahmen 9 und den Schraubenköpfen können als Rückstellfedern wirken.

Der Abstreifrahmen 9 nimmt an seinem Rand die erstarrte Formmasse 30 mit und gibt zwischen dem Formeinsatz 1 und dem Abstreifrahmen einen ringförmigen, konischen Spalt frei.

Durch diesen Spalt kann das unter Druck stehende Stickstoffgas zwischen den Formeinsatz 1 und das Formteil 30 gelangen und das Formteil selbst durch flächig anliegenden Gasdruck von dem Formeinsatz 1 abheben. Der Druck des eingelassenen Gases bewirkt eine gleichmäßig über die gesamte Fläche der erstarrten Formmasse 30 bzw. des Formeinsatzes 1 einwirkende Kraft, die gegenüber den aus dem Stand der Technik bekannten Lösungen eine Entformung mit wesentlich geringeren auf das Formteil einwirkenden Biegespannungen erlaubt.

Es wäre bei kleinen Durchmessern des Formeinsatzes 1 auch möglich, den Abstreifrahmen 9 ohne Druckgasunterstützung anzuheben, so daß das Formteil aus dem Formeinsatz 1 allein durch Anheben im Randbereich herausgelöst wird. Es ist jedoch in der Mikrostrukturtechnik wie bei der Halbleiterherstellung erwünscht, die Formteile im Durchmesser so groß wie möglich herstellen zu können, so daß das druckgasgestützte Entformen des mikrostrukturierten Bauteils derzeit bevorzugt wird.

Mit der dargestellten Vorrichtung ist ein zuverlässiges Entformen von mikrostrukturierten Bauteilen mit hohem Aspektverhältnis und großem Formeinsatzdurchmesser möglich. Außerdem ist die nutzbare Fläche des Formeinsatzes 1 sehr groß, da die aus dem Stand der Technik bekannten Auswerferstifte nicht mehr erforderlich sind.

## Patentansprüche

1. Vorrichtung zur Herstellung von mikrostrukturierten Formteilen (30) mittels Abformung, mit einem den abzuformende Mikrostrukturen entsprechenden Formeinsatz (1), mit einem zwischen einer Ruheposition und einer Arbeitsposition verfahrbaren Auswerfer (8,9) zur Entformung des Formteils (30), **dadurch gekennzeichnet, daß** der Auswerfer (8,9) das Formteil (1) zumindest abschnittsweise randseitig untergreift.

2. Vorrichtung nach Anspruch 1, **dadurch gekennzeichnet, daß** der Auswerfer (8,9) in seiner Ruheposition an seiner dem Formteil (30) zugewandten Seite mit dem Formeinsatz (1) bündig abschließt oder um einen geringen Betrag übersteht.

3. Vorrichtung nach einem der vorhergehenden Ansprüche, **dadurch gekennzeichnet, daß** der Auswerfer (8,9) das Formteil (30) beim Verfahren von der Ruheposition in die Arbeitsposition randseitig von dem Formeinsatz (1) abhebt.

4. Vorrichtung nach einem der vorhergehenden Ansprüche, **dadurch gekennzeichnet, daß** an der dem Formteil (30) abgewandten Seite des Auswerfers (8,9) wenigstens in seiner Arbeitsposition ein Raum (20) vorgesehen ist, der mit einem unter Druck stehenden Fluid füllbar ist.

5. Vorrichtung nach einem der vorhergehenden Ansprüche, **dadurch gekennzeichnet, daß** der Auswerfer (8,9) durch Einwirkung des unter Druck stehenden Fluids von seiner Ruheposition in seine Arbeitsposition verfahren wird.

6. Vorrichtung nach einem der vorhergehenden Ansprüche, **dadurch gekennzeichnet, daß** der Auswerfer (8,9) ringförmig gestaltet ist.

7. Vorrichtung nach einem der vorhergehenden Ansprüche, **dadurch gekennzeichnet, daß** der Innendurchmesser des Auswerfers (8,9) von der dem Formteil (30) zugewandten Seite zu der dem Formteil (30) abgewandten Seite hin größer wird.

8. Vorrichtung nach einem der vorhergehenden Ansprüche, **dadurch gekennzeichnet, daß** der Formeinsatz (1) mittels Röntgenlithographie oder UV-Lithographie hergestellt ist.

9. Vorrichtung nach einem der vorhergehenden Ansprüche, **dadurch gekennzeichnet, daß** der Formeinsatz (1) auf eine Trägerplatte (2) gelötet ist.

10. Vorrichtung nach einem der vorhergehenden Ansprüche, **dadurch gekennzeichnet, daß** der Auswerfer (8,9) einen ringförmigen Abstreifrahmen (9) umfaßt.

11. Vorrichtung nach einem der vorhergehenden Ansprüche, **dadurch gekennzeichnet, daß** der Auswerfer (8,9) einen Träger (8) umfaßt.

12. Vorrichtung nach einem der vorhergehenden Ansprüche, **dadurch gekennzeichnet, daß** der Abstreifrahmen (9) auf dem Träger (8) befestigt ist.

13. Vorrichtung nach einem der vorhergehenden Ansprüche, **dadurch gekennzeichnet, daß** der Auswerfer (8,9) mit dem Abstreifrahmen (9) und dem Träger (8) im wesentlichen koaxial zu dem Formeinsatz (1) angeordnet ist.

14. Vorrichtung nach einem der vorhergehenden Ansprüche, **dadurch gekennzeichnet, daß** die Abformvorrichtung evakuierbar ist.

15. Verfahren zur Herstellung von mikrostrukturierten Formteilen (30) mittels Abformung, mit einem den abzuformenden Mikrostrukturen entsprechenden Formeinsatz (1), **dadurch gekennzeichnet, daß** folgende Verfahrensschritte vorgesehen sind
- anheben des Formteils in einem Randbereich;
- Einleitung eines Fluids zwischen Formteil und Formeinsatz in den angehobenen Bereich.

16. Verfahren nach Anspruch 15, **dadurch gekennzeichnet, daß** das Formteil in seinem gesamten Randbereich angehoben wird.

17. Verfahren nach Anspruch 15, **dadurch gekennzeichnet, daß** das Formteil in einem Randbereich von weniger als 1 mm seines Umfangs angehoben wird.

18. Verfahren nach Anspruch 15, **dadurch gekennzeichnet, daß** das Formteil anfangs um weniger als 100 µm angehoben wird.

19. Verfahren nach Anspruch 15, **dadurch gekennzeichnet, daß** das Formteil anfangs um weniger als 10 µm angehoben wird.

20. Verfahren nach Anspruch 15, **dadurch gekennzeichnet, daß** das Einleiten des Fluids über einen Zeitraum von mindestens 1 s erfolgt.

21. Verfahren nach Anspruch 15, **dadurch gekennzeichnet, daß** das Einleiten des Fluids über einen Zeitraum von mindestens 10 s erfolgt.
